(19) **Europäisches Patentamt**
**European Patent Office**
**Office européen des brevets**

(11) **EP 3 560 349 B1**

(12) **EUROPEAN PATENT SPECIFICATION**

(45) Date of publication and mention
of the grant of the patent:
**07.06.2023  Bulletin 2023/23**

(21) Application number: **18382410.1**

(22) Date of filing: **12.06.2018**

(51) International Patent Classification (IPC):
***A23L 17/00*** *(2016.01)*

(52) Cooperative Patent Classification (CPC):
**A23L 17/70; A23L 17/00**

(54) **FISH-BASED FOOD PRODUCT**

FISCHBASIERTES NAHRUNGSMITTELPRODUKT

PRODUIT ALIMENTAIRE À BASE DE POISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2018  PCT/ES2018/070328**

(43) Date of publication of application:
**30.10.2019  Bulletin 2019/44**

(73) Proprietor: **LAGUMAR SEAS, S.L.**
**20071 Irura (Guipuzkoa) (ES)**

(72) Inventors:
- **CAÑADA MILLÁN, Javier**
  **20271 IRURA (Gipuzkoa) (ES)**
- **BARANDIARAN MARTÍNEZ, María**
  **20271 IRURA (Gipuzkoa) (ES)**
- **ASEGUINOLAZA GARCÍA, Ana**
  **20271 IRURA (Gipuzkoa) (ES)**
- **PERAL DÍEZ, Irene**
  **48395 SUKARRIETA (BIZKAIA) (ES)**

- **LLORENTE HOLGADO, Raquel**
  **48395 SUKARRIETA (BIZKAIA) (ES)**

(74) Representative: **Ibarra Garcia, Isabel**
**PADIMA**
**Explanada de España 11,1°**
**03002 Alicante (ES)**

(56) References cited:
**EP-A1- 0 157 433     EP-A1- 1 149 538
US-A- 4 393 087**

- **DATABASE WPI Week 200530 Thomson
  Scientific, London, GB; AN 2005-292369
  XP002783266, & KR 2004 0102576 A (DAERIM
  CORP) 8 December 2004 (2004-12-08)**
- **DATABASE WPI Week 201821 Thomson
  Scientific, London, GB; AN 2018-20598S
  XP002783267, & CN 107 772 234 A (TIANMEN
  XINTIAN AGRIC DEV CO LTD) 9 March 2018
  (2018-03-09)**

**Description**

Field of the Invention

The present invention belongs to the field of food industry. In particular, it relates to an expanded fish-based product with particular sensory and nutritional characteristics. It also relates to the method for preparing said product and to the use of said product.

Background of the Invention

The production of products similar to natural fish or shellfish from a product referred to as surimi has been known for many years. A product which is obtained from fish muscle that has been minced, washed, and drained until having a proportion of water similar to the original, proteins cryoprotectants added thereto, and is generally preserved in a frozen state, is identified with the term "surimi." These products similar to natural fish or shellfish products are developed by forming gels with a different texture, shape, and flavor, depending on the physicochemical variations that are introduced in the myofibrillar protein of the fish used as the basis for the surimi. Surimi products are generally imitations of seafood, such as crab legs, shrimp, scallops, lobsters, etc.

In the current diet, snacks, particularly healthy snacks, are garnering great interest. Spanish Royal Decree (*Real Decreto*) 126/1989, whereby approving Technical Health Regulations for the preparation and marketing of potato chips and snacks, establishes that in order to belong to the snack category, the moisture content of the products may not exceed the maximum value of 5%. In the case of potato chips, the upper moisture content limit is set at 3%.

Companies that produce snacks have been trying for decades to develop snacks with particular sensory characteristics that are healthier than those already available on the market. Several products have been described in the literature.

Patent document KR 200401002576 A describes a surimi paste that is mixed with salt and other ingredients, such as starch and water, and extruded, steam-treated, dried and irradiated with microwaves, and cut. The expanded product thus obtained is coated with a coating consisting of sugar, water, paprika powder, and ginger powder, to finally be dried with hot air.

Patent document GB 1440544 describes a fish-based snack which has a method of preparation that comprises mixing ground fish with flour, then imparting to it the desired shape, cooking it with steam or microwaves, drying it with hot air and frying.

Patent document US 4814196 describes a process for preparing a fish-containing snack food similar to potato chips. To that end, soybean protein and potato starch are added to surimi, which is extruded, cut into slices, and fried, obtaining a crunchy snack-type product.

Patent document CN 103948049 describes a dehydrated fish snack that is obtained from pieces of frozen fish, deodorized by biofermentation, rinsed, steamed, subjected to separation of fish fibers, addition of soybean protein fibers, frying while adding seasonings, addition of an exogenous adhesive, formed, and dried. The obtained fish snack is a reconstituted fish-based product with a texture, chewiness, and nutritional properties similar to those of natural fish fibers.

To date, the inventors are not aware of the presence of these products on the market. Furthermore, a feature that makes snacks particularly appealing is their aerated while at the same time crunchy character. However, these features are not always obtainable by the processes described in the state of the art. There is therefore a need to develop a method for preparing a fish-based product that can be classified as a snack, that has high fish protein content, and that is furthermore an aerated while at the same time crunchy product. The authors of the present invention have surprisingly developed a simple and quick method which results in a healthy snack, which has improved features in terms of texture, and which is a product that can be a product ready-to-eat or a product requiring a simple handling to consume, and which also has a long shelf life without having to be kept refrigerated.

Object of the Invention

In a first aspect, the present invention relates to a method for preparing a fish-based food product comprising the following steps:

a) preparing a homogenous paste comprising:

- fish muscle and/or fish flesh and/or surimi (abbreviated as P hereinafter),
- flour and/or starch (abbreviated as H hereinafter),
- salt,
- leavening agent,

- optionally sugar and/or food seasoning,
- optionally water,

wherein the P:H ratio is from 1:1 to 3:1;

b) extruding and stuffing the homogenous paste prepared in step a) into a non-porous casing, obtaining a stuffed product;

c) applying a heat treatment to the stuffed product obtained in step b) until obtaining a gelled stuffed product;

d) storing the gelled stuffed product obtained in step c) for at least 24 h at a temperature less than or equal to 8°C;

e) removing the non-porous casing from the product obtained in step d) and cutting the product into slices;

f) drying the slices obtained in e) until obtaining a product with a final moisture content between 5% and 18%;

g) packaging and storing at rest for at least 24 h at a temperature of between 15°C and 25°C;

h) expanding by heat treatment wherein the fish-based food product is an expanded and crunchy product and has uniform texture.

A second aspect of the present invention relates to an expanded fish-based food product obtainable by the method according to the first aspect of the invention. Said expanded fish-based food product is crunchy and has uniform texture.

A third aspect of the present invention relates to a fish-based food product comprising:

- fish muscle and/or fish flesh and/or surimi (P),
- flour and/or starch (H),
- salt,
- leavening agent,
- optionally sugar and/or food seasoning,

wherein the total fish protein content is at least 12% (w/wt) and the moisture content is less than or equal to 5% (w/w$_t$), and wherein the product is an expanded and crunchy product, and has uniform texture.

A fourth aspect of the present invention relates to the use of the product according to the second or third aspect of the invention for direct consumption or as an ingredient in the agro-food industry.

Other objects, features, advantages, and aspects of the present application will be evident for one skilled in the art from the enclosed description and claims.

Brief Description of the Drawings

Figure 1 shows photographs of the product of the invention before being expanded (pellet) (A) and after being expanded by frying (B), baking with air (C), and microwave (D).

Figure 2 shows a graph depicting force (g) with respect to time (s), wherein the number of force peaks (asterisk) and the maximum force that corresponds with fracturability (maximum breaking force, arrow) can be seen.

Figure 3 shows photographs of the expanded product of the invention during the penetration test with a texture analyzer, before (panel A) and after (panel B) applying the spherical probe.

Figure 4 shows a photograph showing the drawing of lines on the surface of the product before (A) and after (B) expansion.

Figure 5 shows photographs showing the texture of the expanded products obtained from pastes with different P:H ratios. The P:H ratio of the paste used to prepare each product is 1:1 (A); 1.5:1 (B); 2:1 (C); 2.5:1 (D); and 3.5:1 (E).

Figure 6 shows a photograph of a pellet (A) and the corresponding expanded product (B) in which step b) was carried out in a porous casing.

Figure 7 shows a photograph of a pellet (A) and the corresponding expanded product (B) in which step c) was carried out at a temperature greater than 93°C.

Figure 8 shows photographs of a pellet (A) and the corresponding expanded product (B) obtained without stabilization under refrigeration after gelling.

Figure 9 shows a photograph of pellets (A) and the corresponding expanded product (B) obtained without post-drying stabilization. Panel C shows a product prepared according to the method of the invention.

Figure 10 shows a radar chart showing the sensory profile of the product of the invention, wherein the crunchiness (Cr), hardness (D), cohesion (C), brittleness (F), airiness (A), and chewiness (M) of the product expanded by baking (solid line), frying (dashed line), and microwave (dotted line) have been analyzed.

Detailed Description of the Invention

As it is used in the present application, singular forms, e.g. "a/one" and "the" include their corresponding plural forms unless it is clearly indicated otherwise by context. Unless otherwise defined, all the technical and scientific terms used in the present document have the meaning as normally understood by one skilled in the art to which this invention belongs. For the purpose of aiding in comprehension and clarifying the meaning of given terms in the context of the present invention, the following definitions and particular and preferred embodiments thereof, applicable to all the embodiments of the different aspects of the present invention, are provided:
In the terms of the present invention, **crunchy product** or **product of a crunchy character** is understood as a product which has a firm and brittle texture, which fractures and breaks apart abruptly and completely during biting and chewing and gives off a characteristic sound, crunches, when it is fractured. Crunchiness can be analyzed by means of different techniques, such as sensory analysis (tasting) or penetration analysis with a texture analyzer, for example. The maximum breaking force of the product and the number of force peaks are analyzed in said penetration analysis.
In the terms of the present invention, **expanded product** or **product with an expanded structure** is understood as a product which has an aerated structure and has increased in volume due to changes in its structure.
In the terms of the present invention, **aerated product** or **product with an aerated structure** is understood as a product having a structure with a large number of cells with air which are perceived upon chewing the product. It is a geometric property related to the perception of the shape, orientation, and amount of air bubbles present in the structure of the product. Airiness can be analyzed by means of different techniques, such as sensory analysis or penetration analysis with a texture analyzer, for example, analyzing the number of force peaks.
In a first aspect, the present invention relates to a method (method of the invention) for preparing a fish-based food product, characterized in that it comprises the following steps:

    a) preparing a homogenous paste comprising:

- P,
- H,
- salt,
- leavening agent,
- optionally sugar and/or seasoning,
- optionally water,

    wherein the P:H ratio is from 1:1 to 3:1;
    b) extruding and stuffing the homogenous paste prepared in step a) into a non-porous casing to obtain a stuffed product;
    c) applying a heat treatment to the stuffed product obtained in step b) until obtaining a gelled stuffed product;
    d) storing the gelled stuffed product obtained in step c) for at least 24 h at a temperature less than or equal to 8°C;
    e) removing the non-porous casing from the product obtained in step d) and cutting the product into slices;
    f) drying the slices obtained in e) until obtaining a product with a final moisture content of between 5% and 18%;
    g) packaging and storing at rest for at least 24 h at between 15°C and 25°C;
    h) expanding by heat treatment.

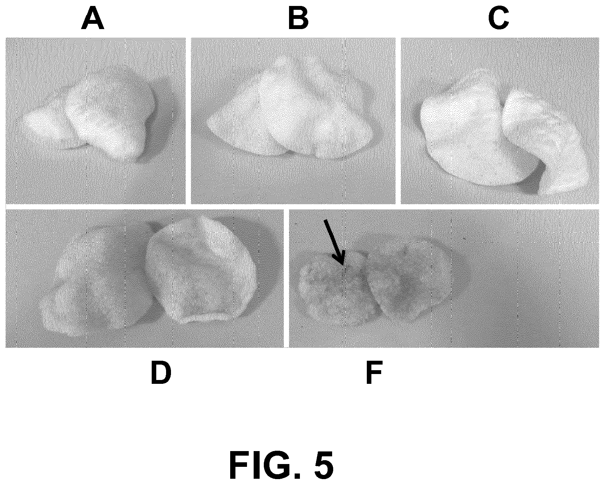

The end product obtained by the method of the invention is an expanded and crunchy fish-based food product. The particular conditions of the method of the invention assure the correct expansion and texture of the product. In the context of the present invention, correct expansion is understood to mean that expansion which is characterized by linear expansion of at least 50%. Furthermore, it is an expansion that results in a uniform and/or homogenous texture (correct texture), e.g., without regions having a different consistency and/or hardness. Furthermore, the end product is easy to chew.
The P:H ratio of the paste is essential for obtaining the correct expansion of the product. P:H ratios exceeding 3:1 result in products with incorrect expansion in which there are unexpanded and hard regions (see Example 4, Figure 5). In a preferred embodiment, as regards expansion, texture, and protein content, the P:H ratio is from 1.5:1 to 2.5:1.
In a preferred embodiment according to any one of the embodiments of the first aspect of the invention, the paste comprises P, H, salt, leavening agent, and sugar or seasoning. In another preferred embodiment, the paste comprises P, H, salt, leavening agent, sugar, and food seasoning. In another preferred embodiment according to any one of the embodiments of this paragraph, the paste comprises water.
In the context of the present invention, the percentages are provided by weight with respect to the total weight (w/wt) unless otherwise indicated. The percentage by weight is provided by wet weight.
In a particular embodiment according to any one of the preceding embodiments, the paste of step a) comprises:

- 20%-74% P,
- 20%-45% H,
- 0.1 %-3% salt,
- 0.2%-1% leavening agent,
- 0%-5% sugar,
- 0%-2% food seasoning, and
- optionally water,

wherein the percentage is provided by weight based on the total weight (i.e., total weight of the paste).

In another particular embodiment according to any one of the preceding embodiments, the paste of step a) consists of:

- 20%-74% P,
- 20%-45% H,
- 0.1%-3% salt,
- 0.2%-1% leavening agent,
- 0%-5% sugar,
- 0%-2% food seasoning, and
- 0%-30% water,

wherein the sum of all the ingredients of the paste is 100% and the percentage is provided by weight based on the total weight of the paste.

In a particular embodiment according to any one of the preceding embodiments, the percentage of sugar is >0%-5%, preferably 0.1%-2%, and more preferably 0.1 %-1 %.

In another particular embodiment according to any one of the preceding embodiments, the percentage of food seasoning is >0%-2%, preferably 0.1%-0.5%.

In a particular embodiment according to any one of the embodiments of the first aspect of the invention, the percentage of water is 0%-30%, preferably >0%-30%, and more preferably 5%-25%.

Fish proteins provided by fish muscle and/or fish flesh and/or surimi are considered very healthy proteins, since they have all the essential amino acids and a high biological value. Therefore, in a particular embodiment the paste comprises fish muscle and/or fish flesh as a source of fish protein. In a preferred embodiment, the paste comprises surimi as a source of fish protein, thereby obtaining a product with a very mild fish flavor, even in the absence of food seasonings, which allows obtaining the desired aromatic profile by adding aromas. In another preferred embodiment according to any one of the preceding embodiments, the paste does not comprise soybean proteins.

As regards the flour and/or starch, they can be of one type or a combination of types. For example, the flour can be legume flour, cereal flour, tuber flour, pseudocereal flour, and combinations thereof. In a particular embodiment, the flour is selected from the group consisting of rice flour, corn flour, wheat flour, oat flour, millet flour, rye flour, pea flour, chickpea flour, soybean flour, buckwheat flour, sweet potato flour, quinoa flour, and combinations thereof, preferably being rice flour and/or corn flour. In another particular embodiment, the starch is selected from the group consisting of rice starch, tapioca starch, corn starch, potato starch, wheat starch, and combinations thereof, preferably being rice starch and/or tapioca starch.

The leavening agent is a food additive that causes carbon dioxide gas to be given off. It is formed by carbonates or bicarbonates and acts when the product to which it has been added is heated or comes into contact with water. In a particular embodiment according to the first aspect of the invention, the leavening agent is selected from the group consisting of sodium bicarbonate and potassium bicarbonate, preferably being sodium bicarbonate.

There are different types of surimi as regards, for example, quality, the season during which the fish was caught, etc. Said surimi variability results in an expansion that may be uncontrollable and incorrect (e.g., it is not uniform throughout the entire product). Surprisingly, the addition of leavening agent allows controlling and rendering a correct expansion regardless of the surimi used. The leavening agent thereby provides stability to the expansion and improves the texture characteristics of the end product, successfully obtaining a crunchy, aerated, and uniform texture throughout the entire product, regardless of the source of fish protein.

Salt is also essential since it assures solubilization of the myofibrillar proteins of the fish muscle responsible for gelling. In a particular embodiment according to any one of the preceding embodiments, the salt is sodium chloride or potassium chloride, preferably being sodium chloride.

In a particular embodiment according to any one of the preceding embodiments, the sugar is sucrose.

In a particular embodiment according to any one of the preceding embodiments, the food seasoning is selected from aroma, coloring, flavor enhancer, and mixtures thereof, and preferably it is one aroma or a combination of aromas. In a preferred embodiment, the aroma is selected from the group consisting of plant aromas, meat aromas, dairy aromas, fish aromas, or combinations thereof. In another preferred embodiment, the coloring is a natural coloring or a combination of natural colorings. Flavor enhancers are well-known to the skilled in the art. As is known in the field of foods, flavor enhancers enhance the flavor of foods. They are generally compounds derived from amino acids and nucleotides which contribute to developing the fifth taste known as umami. In a particular embodiment, the flavor enhancer is selected from the group consisting of monosodium glutamate, inosinate, guanylate, yeast extract, hydrolyzed proteins, and mixtures thereof; the flavor enhancer is preferably monosodium glutamate.

The preferred expansion and texture conditions are obtained by carrying out step a) in a series of particular sub-steps and in a given order. Therefore, in a preferred embodiment according to any one of the preceding embodiments, step a) is carried out according to the following sub-steps and order:

a1) mincing the fish muscle and/or fish flesh and/or surimi;
a2) adding the leavening agent, the salt, and optionally the sugar and/or the food seasoning, and 30-50% of the total flour and/or starch to the minced fish muscle and/or fish flesh and/or surimi, and mixing;
a3) adding the rest of the flour and/or starch and the water, if the paste comprises water, to the mixture obtained in a2), and mixing; and
a4) homogenizing the mixture obtained in a3) under vacuum.

Furthermore, the authors of the present invention have determined optimal conditions for carrying out steps a1) to a4), resulting in a product with excellent texture and expansion. Therefore, in a preferred embodiment according to the preceding paragraph steps a1), a2), and a3) are carried out at between 400 and 900 rpm, and/or step a4) is carried out at between 900 and 3,200 rpm. In another preferred embodiment according to any one of the embodiments of the preceding paragraph and this paragraph, step a1) is carried out for between 15 and 180 seconds, preferably between 60 and 120 seconds, and/or steps a2) and a3) are carried out for between 1 and 8 minutes, preferably between 1 and 5 minutes. In a preferred embodiment according to any one of the embodiments of the preceding paragraph and this paragraph, steps a1), a2), a3), and a4) are carried out at a temperature less than or equal to 8°C, more preferably between 0°C and 8°C, and even more preferably between 0°C and 5°C.

In a preferred embodiment according to any one of the preceding embodiments, step a), or one, two, three, or all of its sub-steps, preferably each one of all its sub-steps, is carried out under vacuum, obtaining a more homogenous paste to thereby obtain a bubble-free pellet with a homogenous structure. Furthermore, mincing time is reduced.

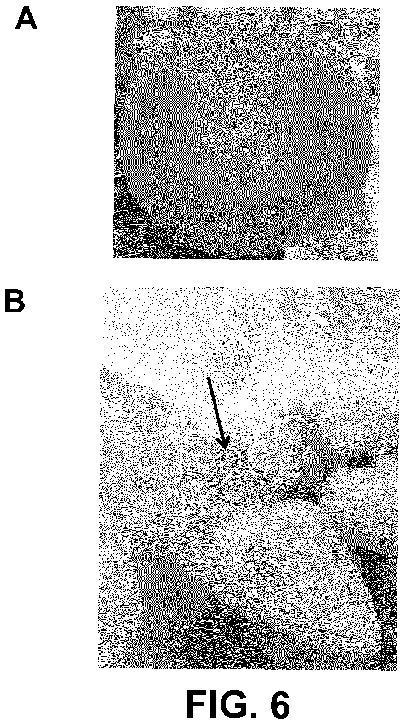

In step b), the homogenous paste obtained in step a) is extruded and used to fill a non-porous casing, preferably a plastic casing, for example, a polyamide casing. It is essential for the casing to be non-porous since the use of a porous casing, for example a cellulose casing, results in, among others, a non-uniform uptake of moisture by the gelled matrix which results in halos forming in the pellet (Figure 6A), which finally results in a non-uniform expansion and a product with regions having hard textures (Figure 6B, arrow). These characteristics are not desirable since they produce an unpleasant and even dangerous texture in the mouth due to the hardness of certain regions (for example, dangerous due to choking or breakage of dental prostheses).

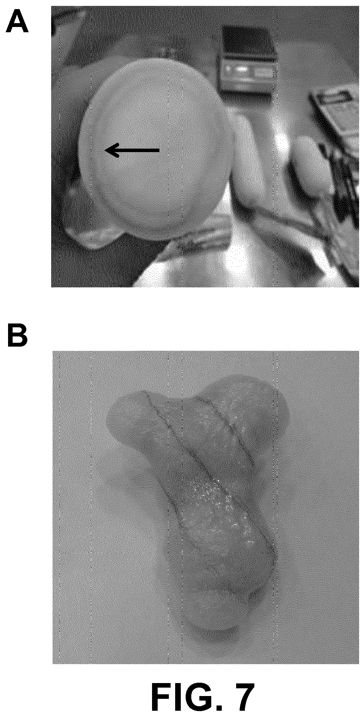

In pre-cutting gelling step c), the product is subjected to a heat treatment which can be carried out in different ways. However, temperatures exceeding 93°C affect expansion (see Example 6, Figure 7). In a particular embodiment according to any one of the embodiments of the first aspect of the invention, step c) is carried out until the temperature inside the product is 89°C-91°C. Preferably, the temperature to which the product is subjected in step c) is less than or equal to 93°C, more preferably 89°C-93°C.

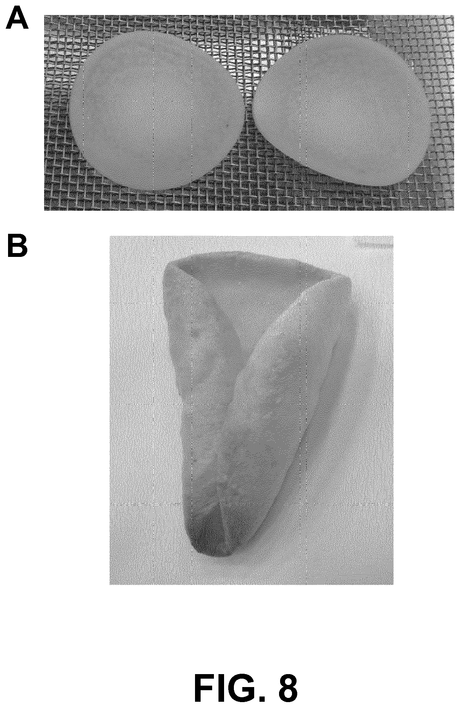

Storing step d) is of essential importance since it allows stabilizing the product after gelling (post-gelling stabilization) and as shown in Example 7 (Figure 8), this is essential in order to obtain correct expansion and texture. The storage is carried out at a temperature less than or equal to 8°C, preferably at a temperature of between 0°C and 8°C, and more preferably between 0°C and 5°C. Therefore, in a particular embodiment according to any one of the preceding embodiments the product obtained in step c) is cooled in step d) to a temperature comprised between 0°C and 8°C, preferably between 0°C and 5°C, and is stored at said temperature for at least 24 h. Said cooling is preferably carried out by means of immersing the gelled product in a water and ice bath. In a particular embodiment according to any one of the preceding embodiments, step d) is carried out for between 24 h and 72 h, and preferably for between 24 h and 48 h.

Step d) furthermore allows subsequent storage in freezing conditions, for example at less than -18°C, which is a significant advantage in terms of industrial production. Therefore, in a preferred embodiment step d) further comprises subsequent storage in freezing conditions. In a particular embodiment according to any one of the preceding embodiments, said storage in freezing conditions is carried out for at least 1, 2, 3, 4, 5, 6, 7, 8, 9, 10, 11, 12, 13, or 14 days, more particularly for at least 7 days.

As regards the cutting step, in a particular embodiment according to any one of the embodiments of the first aspect of the invention cutting is performed in step e) such that the slices have a thickness less than or equal to 10 mm, preferably less than or equal to 5 mm. In any of these embodiments, the preferred minimum size of the slice is 1 mm. With these thicknesses an optimal expansion is achieved, not obtainable with thicknesses greater than 10 mm. When the product has been stored in freezing conditions, cutting is preferably carried out in a semi-frozen state, thereby making cutting easier.

As indicated above, the product is dried after cutting until obtaining a moisture content between 5% and 18% (step f). Therefore, a single drying process is carried out in the present invention and it is performed after cutting. Doing it in a different order results in a product with a non-uniform texture. When the product is dried to moisture contents that are less or greater than those indicated, correct expansion and texture are not obtained. In a preferred embodiment, as regards expansion and texture according to any one of the embodiments of the first aspect of the invention, the moisture content obtained in step f) is from 8% to 14%.

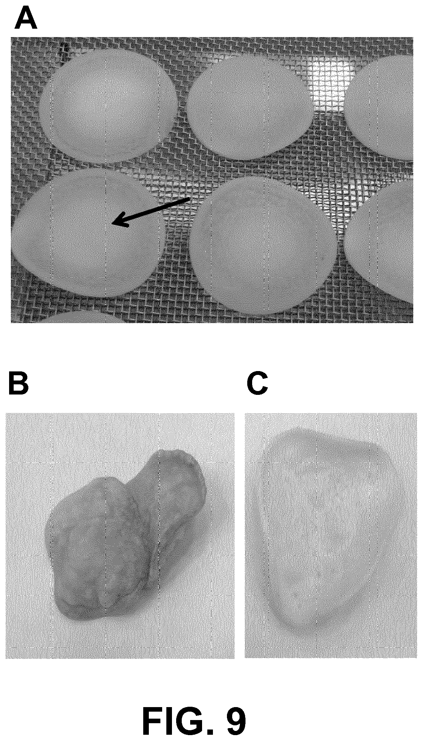

The product is packaged in step g) in a packaging that does not allow the uptake or loss of moisture. Therefore, post-drying stabilization (step g) allows balancing out moisture content and temperature throughout the entire surface and thickness of the product and thereby prevents the occurrence of halos and problems of expansion (see Example 8, Figure 9). In a particular embodiment according to any one of the embodiments of the first aspect of the invention, in which the expansion is to take place directly after step g) (i.e., the unexpanded product will not be stored for subsequent sale or use), storage is performed between 24 h and 96 h, preferably between 24 h and 72 h.

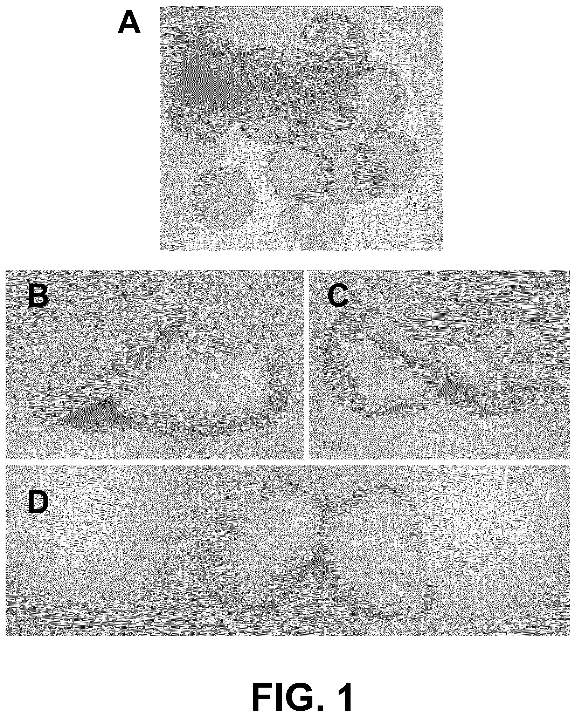

As shown in Figure 1, step h) can be carried out by means of applying microwaves, baking, or frying, and correct expansion is obtained in all cases. However, expansion is preferably carried out by means of baking or microwaves, thereby obtaining a product with a very low fat content (see Table 5), which results in a very healthy snack due to both its high protein, particularly fish protein, content and to its low fat content.

In a particular embodiment according to any one of the preceding embodiments, the product is sold as a cut product to be expanded before consuming. Therefore, in a particular embodiment the method of the invention, comprises a metering, weighing, and packaging step g') after step g).

Finally, in a particular embodiment, the method of the present invention comprises or consists of steps a)-g) or steps a)-h), and optionally step g'), as defined in any of the preceding embodiments of the first aspect of the invention.

After the step h), the method of the invention results in an expanded product with a moisture content less than or equal to 5%, preferably 1-5%, and more preferably 2-5%, so it can be classified as a snack. Furthermore, said moisture content provides both microbiological and physicochemical stability, which results in a product having a long shelf life without requiring refrigeration (e.g., at 15°C-25°C). Interestingly, the unexpanded product has a shelf life of at least 6 or 12 months, and the expanded product has a shelf life of at least 2 months.

The expanded fish-based food product has sensory and nutritional characteristics that make it very appealing and healthy. Therefore, in a second aspect the invention relates to a fish-based food product obtainable by the method according to any one of the embodiments of the first aspect of the invention.

Said product, obtained after step h), is an expanded and crunchy product, has a uniform texture and a fish protein content of at least 12%. Said product is furthermore a product that can be labeled as "fat-free" (total fat content less than or equal to 0.5%) when it is expanded by baking or microwave.

The end product has a moisture content less than or equal to 5%, preferably 1-5%, and more preferably 2-5%, so it can be classified as a snack. Furthermore, the product has a long shelf life without requiring refrigeration.

In a third aspect, the present invention relates to a fish-based food product comprising:

- fish muscle and/or fish flesh and/or surimi (P),
- flour and/or starch (H),
- salt and leavening agent,
- optionally sugar and/or food seasoning,

wherein the total fish protein content is at least 12% and the moisture content is less than or equal to 5%, wherein the percentage is provided by weight based on the total weight (i.e., total weight of the product), and wherein the product is an expanded and crunchy product. Furthermore, the product has a uniform texture.

The food product according to the second and third aspects of the invention preferably has a moisture content of 1%-5%, and more preferably of 2%-5%. The authors of the invention have therefore developed products which comply with the regulation provided in Spanish Royal Decree 126/1989 and can therefore be classified as snacks. Therefore, in a particular embodiment of the second and third aspects of the invention, the food product is a fish-based snack.

The product of the invention according to any one of the embodiments of the second and third aspects of the invention is extremely healthy due to its high fish protein content. In a particular embodiment, the product comprises fish muscle and/or fish flesh. In another particular embodiment, the product comprises surimi. Preferably, the product of the present invention does not comprise fish skin.

In a particular embodiment according to any one of the embodiments of the second and third aspects of the invention, the food product consists of P, H, salt, leavening agent, and optionally sugar and/or seasoning. It preferably comprises or consists of P, H, salt, leavening agent, and sugar or seasoning, and it more preferably comprises or consists of P, H, salt, leavening agent, sugar, and food seasoning.

The particular and preferred embodiments in connection with the ingredients of the product of the invention have been described in detail in the context of the first aspect of the invention and are applicable in the second and third aspects of the invention.

In another particular embodiment according to any of the embodiments of the second and third aspects of the invention, the product comprises a fish protein content between 12% and 27%, more preferably between 15% and 27%. As indicated above, the percentage by weight is provided based on the total weight, in this case the total weight of the product, and is by wet weight. The same applies to the following paragraphs.

In another particular embodiment according to any one of the embodiments of the second and third aspects of the invention, the product comprises a carbohydrate content between 40% and 78%, preferably between 50% and 75%.

In another particular embodiment according to any one of the embodiments of the second and third aspects of the invention, the product comprises a fat content between 0.2% and 27.5%, preferably between 0.2% and 0.5%, thereby being a "fat-free" product.

In another particular embodiment according to any one of the embodiments of the second and third aspects of the invention, the product comprises an ash content between 1% and 8.5%.

In another particular embodiment according to any one of the embodiments of the second and third aspects of the invention, the product comprises a fiber content between 0.15% and 0.5%.

In a preferred embodiment, the product of the second and third aspects of the invention comprises 1%-5%, preferably 2%-5%, moisture content; at least 12%, preferably 12%-27%, more preferably 15%-27%, fish protein; 40%-78%, more preferably 50%-75%, carbohydrates; 0.2%-27.5%, preferably 0.2%-0.5%, fats; 1%-8.5% ash; and 0.15%-0.5% fiber.

According to EC Regulation No. 1924/2006, a food product can claim that the food is "high protein content" where >20% of the total energy value of the product is provided by protein and that it is a "source of protein" where >12% of the total energy value of the product is provided by protein. The product of the present invention, expanded by means of baking or microwaves, is a product that is "high protein content", whereas the product that is expanded by means of frying is a product which is a "source of protein".

Furthermore, when the product is obtained by expansion by means of microwaves or baking, it has a fat content less than 1%, which is much lower than that of potato chips or even fat-free or baked potato chips. All this makes the product of the present invention a snack with a nutritional value that is ideal for low-fat and protein-rich diets. Furthermore, it is a snack that can be consumed directly (ready-to-eat) or after a simple action for expanding it, thereby providing an easy-to-consume source of fish proteins.

As indicated above, the combination of the characteristics of composition, conditions, and order of the steps of the method of the present invention allow obtaining an expanded product (with an expanded structure), with a particular texture. Said expanded structure has many air-filled cavities on the inside (internal porosity) and on the outside it gives the product a bulky appearance. Furthermore, said expanded structure has a rigidity such that in combination with the inner porosity, it gives the product its particular crispiness. This final characteristic makes the product of the invention according to the second and third aspects an appealing snack, as it looks like wheat snacks or the potato or corn snacks, but it is healthier since it has a very low fat content, virtually being fat-free, particularly when it is expanded by microwaves or baking, and a fish protein content of at least 12%.

Furthermore, as regards the mouthfeel, it should be pointed out that the entire product has the same texture, i.e., a uniform and homogenous texture.

As a result of its nutritional and sensory properties, the product of the invention allows different ways of consumption and is intended for any type of consumer, particularly those who are aware of the importance of food in relation to health, and it also allows different uses. Therefore in a fourth aspect, the invention relates to the use of a fish-based food product according to any one of the embodiments of the second or third aspect of the invention for direct consumption or as an ingredient in the agro-food industry.

## Examples

Specific embodiments of the invention which serve to illustrate the invention without limiting the scope thereof are described in detail below.

## Example 1: Preparation of the food product of the invention

A homogenous paste is prepared with the ingredients indicated in Table 1.

Table 1. Ingredients

| Ingredient | Content in % w/w$_t$ of the paste |
| --- | --- |
| Class AA surimi in cubes or flakes, half-thawed | 55 |
| Tapioca starch | 22 |
| Salt | 2 |
| Sugar | 1 |
| Sodium bicarbonate | 0.5 |
| Natural aroma (olive) | 0.15 |
| Water | 19.35 |

Said paste is prepared as follows, in reference to the steps described for the method of the invention:

a1) the surimi in cubes or flakes is minced for 120 seconds at 600 rpm;
a2) the sugar, salt, leavening agent, food seasoning, 30% of the total starch, and 30% of the total water are added to the minced surimi, and this is mixed at a temperature less than 8°C for 3 minutes at 600 rpm;
a3) the rest of the flour and the rest of water are added to the mixture obtained in a2), and this is mixed at a temperature less than 8°C for 3 minutes at 600 rpm;
a4) the mixture obtained in a3) is minced at a temperature less than 8°C for 6 minutes at 2000 rpm and in vacuum conditions until complete homogenization;
b) the homogenous paste prepared in step a4) is extruded and stuffed into a non-porous plastic polyamide casing 4 cm in diameter, obtaining a stuffed product;
c) a heat treatment by immersing in a water bath at 92°C is applied to the stuffed product obtained in step b) until obtaining a gelled stuffed product with an inner temperature of 90°C;
d) the gelled stuffed product obtained in step c) is cooled in a water with ice bath for 1 hour and stored for 24 hours at a temperature less than or equal to 8°C, and it is then frozen at a temperature less than -18°C for 7 days;
e) the casing is removed and the product obtained in step d) is cut, in the half-thawed state, into slices 2.5 mm thick;
f) the slices obtained in e) are dried by hot air at 80°C until obtaining a product with a final moisture content of 10-12%;
g) the product obtained in step f) is packaged in plastic bags to prevent the uptake of moisture; and it is stored for 72 hours at room temperature (15°C-25°C);
h) after taking the product out of the bag, the product expansion is performed by means of heat treatment consisting of:

- baking with hot air at 200°C for 120 seconds; or
- frying at 190°C for 30 seconds; or
- microwaving at 800 W for 20 seconds.

Figure 1 shows a photograph of the product obtained in step g) (hereinafter referred to as pellet) (A) and of the product obtained in step h) by expansion by frying (B), baking (C), or microwaves (D). As can be seen, the product of the present invention (without colorings) has a uniform white-beige color without any toasting differences between regions, regardless of the method of expansion used.

## Example 2. Characterization of the product of the invention

### 2.1. Texture

Product texture was analyzed in a TAXT2i texture analyzer by means of a study of crunchy character based on the analysis of the maximum breaking force (fracturability) of the product upon penetration of a spherical probe and the number of force peaks.
Concerning the number of force peaks, there is a direct relationship between the number of peaks and airiness, i.e., the higher the number of force peaks, the greater the airiness.

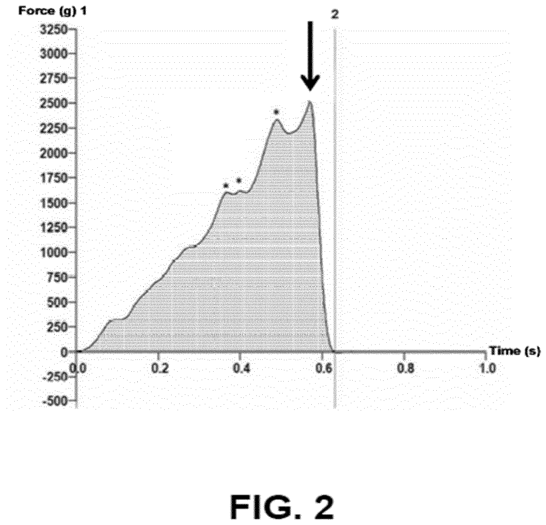

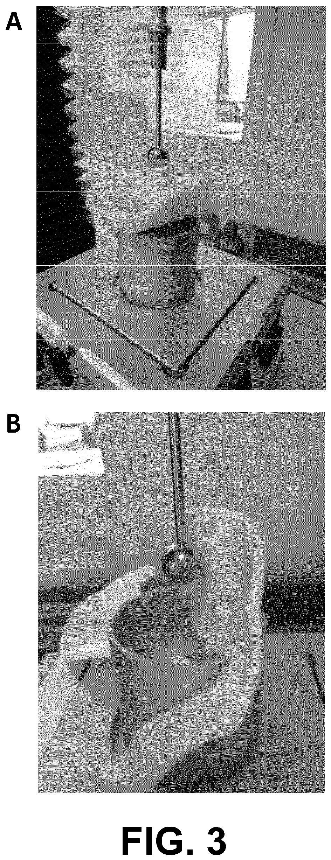

Figure 2 shows a typical graphical depiction of the penetration test with a spherical probe. Figure 3 shows two photographs taken before (panel A) and after (panel B) penetration with the spherical probe.
Table 2 shows the values obtained after testing in the texture analyzer the product of Example 1 expanded by baking, frying, and microwaves.

Table 2. Texture analyzer results

| Expansion by means of | Maximum breaking force (g) | Number of force peaks |
|---|---|---|
| Frying | 966.3 ± 100.27 | 6.1 ± 1.5 |
| Microwaves | 1,018.58 ± 126.14 | 9.1 ± 1.8 |
| Baking | 1,544.55 ± 246.15 | 5.8 ± 0.4 |

As shown in Table 2, the product expanded by means of baking has high crispiness (1,544 g of force), which is greater than that obtained by means of frying or microwaves. As indicated above, there is a direct relationship between the number of force peaks and airiness, so in this case airiness is greater in the products expanded by frying or microwaves. This may be due to the fact that when moisture of the pellet is heated by those methods and then evaporated, it produces a larger number of microbubbles.

Table 3 shows the values obtained after testing in the texture analyzer the product prepared as in Example 1 but with pastes with different P:H and expanded by frying.

Table 3. Texture analyzer results

| P:H | Maximum breaking force (g) | | Number of force peaks | |
|---|---|---|---|---|
| 1:1 | 872.0 | ± 125.04 | 10.4 | ± 1.6 |
| 1.5:1 | 786.3 | ± 97.99 | 9.8 | ± 1.5 |
| 2:1 | 692.5 | ± 75.53 | 8.7 | ± 1.5 |
| 2.5:1 | 966.3 | ± 100.27 | 6.1 | ± 1.5 |
| 3:1 | 1,224.3 ± | 132.84 | 4.0 | ± 1.2 |

It can be seen in Table 3 that the product with the formulation of the homogenous paste with a P:H ratio of 1:1 is the most aerated, whereas the product with the formulation of the homogenous paste with a P:H of 3:1 is the crunchiest.

In all cases, the obtained product is a product with uniform texture, and is crunchy and aerated, with over 12% fish proteins, and has a very mild fish flavor. Furthermore, when it is expanded by microwaves or baking, it is a product with a low fat content.

2.2. Linear expansion

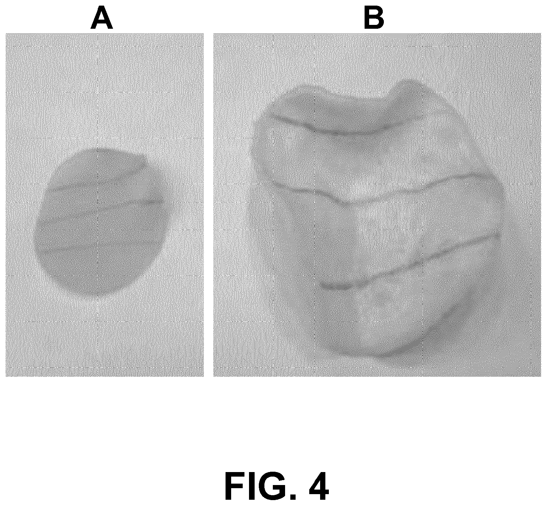

The linear expansion measurement indicates the degree of expansion obtained when subjecting the pellet to heat treatment. The change in length experienced by several lines drawn on the surface of the unexpanded product (pellet) was measured upon being expanded, following the test described in Saeleaw M., & Schleining G. (Effect of frying parameters on crispiness and sound emission of cassava crackers. Journal of Food Engineering, (2011) 103, 229-236). Figure 4 shows photographs of the drawing of lines on the surface of the pellet (A) and of the expanded product (B).

Linear expansion was measured in products prepared as in Example 1, expanded by baking and with different P:H ratios. The results are shown in Table 4, where the linear expansion is provided as an increase in % between the length of the lines before and after expansion.

Table 4. Linear expansion results

| P:H | Linear expansion (%) | |
|---|---|---|
| 1:1 | 108.33 | ± 11.78 |
| 1.5:1 | 107.50 | ± 7.31 |
| 2:1 | 101.30 | ± 3.13 |
| 2.5:1 | 61.90 | ± 4.92 |
| 3.5:1 | 25.43 | ± 7.76 |

As can be seen, P:H ratios greater than 3:1 result in a product with incorrect expansion, not even reaching 50% expansion.

**Example 3. Nutritional characterization of the product of the invention**

3.1. Expanded product

The moisture content, protein content, fat content, carbohydrate content, and ash content of the product obtained in Example 1 by means of expansion by frying, baking, or microwaves, and of the product obtained following the method of Example 1 by means of expansion by baking and with a P:H of 2:1 (Table 5, last column), were analyzed according to the AOAC Method, 2000.

Table 5. Nutritional analysis

|  | P:H = 2.5:1 | | | P:H = 2:1 |
|---|---|---|---|---|
|  | Microwaves | Frying | Baking | Baking |
| Moisture (%) | 4.54 | 2.73 | 3.8 | 4.54 |
| Protein (%) | 21.98 | 18.13 | 22.37 | 20.08 |
| Ash (%) | 3.66 | 3.02 | 3.69 | 7.48 |
| Fat (%) | 0.44 | 18.96 | 0.42 | 0.38 |
| Carbohydrates (%) | 69.16 | 57.01 | 69.49 | 67.27 |
| Fiber (%) | 0.22 | 0.15 | 0.23 | 0.25 |
| Energy from protein content (Kcal (% Kcal)) | 368.96 (23.83%) | 471.50 (15.38%) | 371.68 (24.07%) | 353.32 (22.73%) |

It can be seen how the method of expansion used affects the nutritional characteristics of the product, primarily in relation to expansion by frying, which increases the fat content of the product.

A healthy snack is associated with a low fat content; furthermore, having a high protein content is a bonus in the sense that it is one of the main objectives of the present invention.

As indicated above, according to EC Regulation No. 1924/2006, the product expanded by means of baking or microwaves can claim to be "high protein content," whereas the product expanded by means of frying can claim to be a "source of protein."

As regards fat, that product having a total fat content less than or equal to 3% can be classified and labeled as a product that is "low in fat," and that product having a total fat content less than or equal to 0.5% can be classified and labeled as a "fat-free" product. The product of the present invention, expanded by means of baking or microwaves, can be classified as a "fat-free" product.

3.2. Absorption of fat in frying

The amount of oil absorbed by the pellet when it is subjected to the process of expansion by frying was analyzed by calculating the increase in weight of the dry product before and after frying. The AOAC method for determining moisture content was applied for the drying method, and the following formula was applied:

$$Absorption\ of\ oil(\%) = \frac{Weight\ of\ dry\ cracker\ after\ frying - Weight\ of\ dry\ pellet}{Weight\ of\ dry\ pellet}$$

The results obtained are shown in Table 6.

Table 6. Absorption of oil

| P:H | Absorption of oil (%) |
|---|---|
| 1:1 | 39.10 ± 6.15 |
| 1.5:1 | 36.17 ± 5.50 |
| 2:1 | 31.10 ± 5.31 |

(continued)

| P:H | Absorption of oil (%) |
|---|---|
| 2.5:1 | 17.03± 8.11 |
| 3:1 | 11.37± 1.10 |

As can be seen in Table 6, the absorption of oil decreases as the amount of surimi in the P:H ratio increases.

### Example 4: P:H ratio

A product was prepared according to Example 1 and expanded by means of baking, with P:H ratios of 1:1; 1.5:1; 2:1; 2.5:1, and 3.5:1.

As can be seen in Figure 5, P:H ratios greater than 3:1 result in insufficient expansion (not even reaching 50%), and they furthermore result in a non-uniform texture with the presence of regions of greater hardness due to the non-expansion thereof (see the arrow).

### Example 5. Filling porous casings

A product was prepared according to Example 1 and expanded by means of frying, but in this case a cellulose-based porous casing is filled with the homogenous paste in step b).

As can be seen in Figure 6, the use of a porous casing entails problems of adherence to the gelled stuffed products, with the subsequent loss of structure, as well as problems of expansion since moisture is taken up by the matrix which affects the component ratio. Said moisture uptake can be seen in the formation of halos and in the difference in color between the central region and the region of the outermost diameter of the pellet (Figure 6A). Furthermore, it also leads to incorrect expansion and the presence of regions of greater hardness (Figure 6B, arrow).

### Example 6. Gelling heat treatment

A product was prepared according to Example 1, expanded by means of baking, but it was gelled at a temperature greater than 93°C. Specifically, a temperature of 95°C was applied, and the temperature obtained inside the product was also 95°C.

As shown in Figure 7, it was seen that temperatures greater than 93°C caused the presence of halos in the outermost diameter of the pellet (Figure 7A, arrow) and a contracted structure with hard textures in the product after expansion (Figure 7B).

### Example 7: Post-gelling stabilization

A snack is prepared according to Example 1 with expansion by means of baking, but without performing stabilization under refrigeration of step d) (post-gelling stabilization). Therefore, the product obtained in step c) is frozen without applying stabilization under refrigeration phase. After storage in freezing conditions for 7 days, the product is cut into slices 2.5 mm thick, and a drying step similar to the one described in Example 1 is applied.

As shown in Figure 8, the slices obtained without stabilization have concentric white rings on their surface (Figure 8A), and it can be seen that after the application of baking by hot air, the product does not expand entirely, giving rise to hard and irregular textures and a different degree of surface toasting, even showing burnt regions (Figure 8B). These characteristics are not desirable since they product an unpleasant mouthfeel and can even be dangerous due to the hardness of certain regions. They furthermore have a certain burnt taste.

### Example 8. Post-drying stabilization

A snack was prepared according to Example 1, expanded by means of baking, but without applying a post-drying stabilization process of at least 24 hours, i.e., without storing at room temperature for 72 hours.

As shown in Figure 9, it was seen that the pellets that were not stabilized after drying have a more opaque and therefore moister central region (Figure 9A, arrow), and a more translucent and therefore drier outer region. When the pellets are expanded by baking, it was seen that the pellets that were not stabilized (Figure 9B) required more treatment time for expansion, causing more toasted colors and burnt edges, and they show incorrect expansion that was less than in the expanded products obtained from pellets that were stabilized (Figure 9C).

### Example 9. Sensory analysis - Tasting

The sensory assessment was performed by means of a panel of trained tasters, consisting of 8 qualified individuals, in the Azti-Derio sensory laboratory under white light.

Several taster training sessions were carried out according to UNE-ISO 6658:2008 standard, where the product descriptors were generated and defined, and the tasters learned to use the assessment scales. Different prototypes of expanded products (crackers) prepared at AZTI-Derio were used for taster training.

### Sensory methodology

The sensory characteristics of the expanded samples were assessed by means of a quantitative test based on structured 6-point scales (0: not perceptible, to 5: very intensely perceptible), according to UNE-ISO 4121:2006 and UNE-ISO 6658:2008 standards. The analyzed food products were prepared according to Example 1.

The assessed descriptors were:

- Visual-Appearance: color (white-yellow), shine, homogeneity.
- Mouthfeel: crunchiness, chewiness, airiness, cohesion, hardness, and brittleness, as described in Análisis sensorial, 2nd Edition, AENOR (Asociación Española de Normalización y Certificación), 2010.

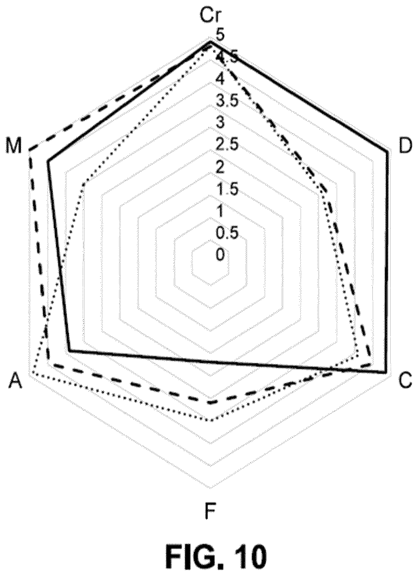

As shown in Figure 10, the expanded product of the present invention is characterized by high crunchiness, airiness, and cohesion, regardless of the method of expansion. The characteristics of chewiness and hardness are more affected by the method of expansion, more brittle and less hard products being obtained by means of expansion by microwaves and frying than those which are obtained by means of baking. As regards chewiness, the products obtained by means of expansion by microwaves require fewer chews to be eaten, whereas those obtained by baking or frying have higher values fairly similar to one another.

### Claims

1.  Method for preparing a fish-based food product, **characterized in that** it comprises the following steps:

    a) preparing a homogenous paste comprising:

      - fish muscle and/or fish flesh and/or surimi (P),
      - flour and/or starch (H),
      - salt,
      - leavening agent,
      - optionally sugar and/or food seasoning,
      - optionally water,

    wherein the P:H ratio is from 1:1 to 3:1, preferably from 1.5:1 to 2.5:1;
    b) extruding and stuffing the homogenous paste prepared in step a) into a non-porous casing, preferably into a plastic casing, obtaining a stuffed product;
    c) applying a heat treatment to the stuffed product obtained in step b) until obtaining a gelled stuffed product;
    d) storing the gelled stuffed product obtained in step c) for at least 24 h at a temperature less than or equal to 8°C;
    e) removing the non-porous casing from the product obtained in step d) and cutting the product into slices, preferably the slices have a thickness less than or equal to 10 mm;
    f) drying the slices obtained in e) until obtaining a product with a final moisture content of between 5% and 18%;
    g) packaging and storing at rest for at least 24 h at a temperature between 15°C and 25°C;
    h) expanding by heat treatment,

    wherein the fish-based food product is an expanded and crunchy product and has uniform texture.

2.  Method according to claim 1, wherein the paste comprises:

      - 20%-74% P,
      - 20%-45% H,
      - 0.1%-3% salt,

- 0.2%-1% leavening agent,
- 0%-5% sugar,
- 0%-2% food seasoning, and
- 0%-30% water,

wherein the percentage is provided by weight based on the total weight of the paste.

3. Method according to claim 1 or 2, wherein step a) is carried out according to the following sub-steps and order:

   a1) mincing the fish muscle and/or fish flesh and/or surimi;
   a2) adding the leavening agent, the salt, and optionally the sugar and/or the food seasoning, and 30-50% of the total flour and/or starch to the minced fish muscle and/or fish flesh and/or surimi, and mixing;

   a3) adding the rest of the flour and/or starch and the water, if the paste comprises water, to the mixture obtained in a2), and mixing; and
   a4) homogenizing the mixture obtained in a3) under vacuum.

4. Method according to claim 3, wherein steps a1), a2), and a3) are carried out at between 400 and 900 rpm, and/or step a4) is carried out at between 900 and 3,200 rpm.

5. Method according to any one of claims 3 to 4, wherein steps a1), a2), a3), and a4) are carried out at a temperature less than or equal to 8°C.

6. Method according to any one of claims 1 to 5, wherein step a) or each of its sub-steps is carried out under vacuum.

7. Method according to any one of the preceding claims, wherein step c) is carried out at a temperature less than or equal to 93°C.

8. Method according to any one of the preceding claims, wherein step d) further comprises freezing the product after storage.

9. Method according to any one of the preceding claims, wherein step h) is carried out by applying microwaves, baking, or frying, preferably by microwaves or baking.

10. Expanded fish-based food product obtainable by the method according to any one of claims 1 to 9, wherein the fish-based food product is crunchy and has uniform texture.

11. Fish-based food product, **characterized in that** it comprises:

    - fish muscle and/or fish flesh and/or surimi,
    - flour and/or starch,
    - salt and leavening agent,
    - optionally sugar and/or food seasoning,

    wherein the total fish protein content is at least 12% and the moisture content is less than or equal to 5%, wherein the percentage is provided by weight based on the total weight of the product, and wherein the product is an expanded and crunchy product and has uniform texture.

12. Fish-based food product according to claim 11, wherein the product is a fish-based snack.

13. Fish-based food product according to claim 11 or 12, comprising a fat content between 0.2% and 27.5%, preferably between 0.2 and 0.5%.

14. Fish-based food product according to any one of claim 11 to 13, comprising a fish protein content between 12% and 27%, more preferably between 15% and 27%.

15. Fish-based food product according to any one of claims 11 to 14, comprising a carbohydrate content between 40% and 78%, preferably between 50% and 75%.

**16.** Fish-based food product according to any one of claims 11 to 15, comprising an ash content between 1% and 8.5%, and/or a fiber content between 0.15% and 0.5%.

**17.** Use of a fish-based food product according to any one of claims 10 to 16 for direct consumption or as an ingredient in the agro-food industry.

**Patentansprüche**

**1.** Verfahren zum Zubereiten eines fischbasierten Nahrungsmittelprodukts, **dadurch gekennzeichnet, dass** es die folgenden Schritte umfasst:

a) das Zubereiten einer homogenen Paste umfassend:

- Fischmuskel und/oder Fischfleisch und/oder Surimi (P),
- Mehl und/oder Stärke (H),
- Salz,
- Triebmittel,
- wahlweise Zucker und/oder Speisewürze,
- wahlweise Wasser,

wobei das P:H-Verhältnis zwischen 1:1 und 3:1, vorzugsweise zwischen 1,5:1 und 2,5:1 liegt;
b) das Extrudieren und Füllen der in Schritt a) zubereiteten homogenen Paste in eine nichtporöse Hülle, vorzugsweise in eine Kunststoffhülle, unter Erhalt eines gefüllten Produkts;
c) das Anwenden einer Wärmebehandlung auf das in Schritt b) erhaltenen gefüllte Produkt, bis ein geliertes gefülltes Produkt erhalten wird;
d) das Aufbewahren des in Schritt c) erhaltenen gelierten gefüllten Produkts mindestens 24 Stunden lang bei einer Temperatur niedriger als oder gleich 8oC;
e) das Entnehmen der nichtporösen Hülle vom in Schritt d) erhaltenen Produkt und das Scheiden des Produkts in Scheiben, wobei die Scheiben vorzugsweise eine Dicke niedriger als oder gleich 10 mm aufweisen;
f) das Trocknen der in e) erhaltenen Scheiben, bis ein Produkt mit einem endgültigen Feuchtigkeitsgehalt zwischen 5% und 18% erhalten wird;
g) das Verpacken und das Aufbewahren im Ruhezustand mindestens 24 Stunden lang bei einer Temperatur zwischen 15oC und 25oC;
h) das Expandieren mittels Wärmebehandlung,

wobei das fischbasierte Nahrungsmittelprodukt an expandiertes und knuspriges Produkt ist, und eine gleichmäßige Textur aufweist.

**2.** Verfahren nach Anspruch 1, wobei die Paste Folgendes umfasst:

- 20%-74% P,
- 20%-45% H,
- 0,1%-3% Salz,
- 0,2%-1% Triebmittel,
- 0%-5% Zucker,
- 0%-2% Speisewürze, und
- 0%-30% Wasser,

wobei das Prozent in Gewicht basierend auf dem Gesamtgewicht der Paste bereitgestellt wird.

**3.** Verfahren nach Anspruch 1 oder 2, wobei Schritt a) gemäß den folgenden Teilschritten und der folgenden Reihenfolge durchgeführt wird:

a1) das Zerkleinern des Fischmuskels und/oder des Fischfleisches und/oder des Surimis;
a2) das Hinzufügen des Triebmittels, des Salzes, und wahlweise des Zuckers und/oder der Speisewürze, und 30-50% des gesamten Mehls und/oder der gesamten Stärke zum zerkleinerten Fischmuskel und/oder Fischfleisch und/oder Surimi, und das Mischen;

a3) das Hinzufügen des Rests des Mehls und/oder der Stärke und des Wassers, wenn die Paste Wasser umfasst, zu der in a2) erhaltenen Mischung, und das Mischen; und

a4) das Homogenisieren der in a3) erhaltenen Mischung unter Vakuum.

4. Verfahren nach Anspruch 3, wobei Schritte a1), a2) und a3) bei zwischen 400 und 900 U/min durchgeführt werden, und/oder Schritt a4) bei zwischen 900 und 3.200 U/min durchgeführt wird.

5. Verfahren nach einem der Ansprüche 3 bis 4, wobei Schritte a1), a2), a3), und a4) bei einer Temperatur niedriger als oder gleich 8°C durchgeführt werden.

6. Verfahren nach einem der Ansprüche 1 bis 5, wobei Schritt a) oder jeder dessen Teilschritte unter Vakuum durchgeführt wird.

7. Verfahren nach einem der vorhergehenden Ansprüche, wobei Schritt c) bei einer Temperatur niedriger als oder gleich 93°C durchgeführt wird.

8. Verfahren nach einem der vorhergehenden Ansprüche, wobei Schritt d) zusätzlich das Einfrieren des Produkts nach der Aufbewahrung umfasst.

9. Verfahren nach einem der vorhergehenden Ansprüche, wobei Schritt h) mittels des Anwendens von Mikrowellen, Backen oder Einfrieren, vorzugsweise mittels Mikrowellen oder des Backens durchgeführt wird.

10. Expandiertes fischbasiertes Nahrungsmittelprodukt, welches mittels des Verfahrens nach einem der Ansprüche 1 bis 9 erhältlich ist, wobei das fischbasierte Nahrungsmittelprodukt knusprig ist, und gleichmäßige Textur aufweist.

11. Fischbasiertes Nahrungsmittelprodukt, **dadurch gekennzeichnet, dass** es Folgendes umfasst:

   - Fischmuskel und/oder Fischfleisch und/oder Surimi,
   - Mehl und/oder Stärke,
   - Salz und Triebmittel,
   - wahlweise Zucker und/oder Speisewürze,

wobei der gesamte Fischproteingehalt mindestens 12% ist und der Feuchtigkeitsgehalt niedriger als oder gleich 5% ist, wobei das Prozent in Gewicht basierend auf dem Gesamtgewicht des Produkts bereitgestellt wird, und wobei das Produkt ein expandiertes und knuspriges Produkt ist, und eine gleichmäßige Textur aufweist.

12. Fischbasiertes Nahrungsmittelprodukt nach Anspruch 11, wobei das Produkt ein fischbasierter Snack ist.

13. Fischbasiertes Nahrungsmittelprodukt nach Anspruch 11 oder 12, welches einen Fettgehalt zwischen 0,2% und 27,5%, vorzugsweise zwischen 0,2 und 0,5% umfasst.

14. Fischbasiertes Nahrungsmittelprodukt nach einem der Ansprüche 11 bis 13, welches einen Fischproteingehalt zwischen 12% und 27%, weiter vorzugsweise zwischen 15% und 27% umfasst.

15. Fischbasiertes Nahrungsmittelprodukt nach einem der Ansprüche 11 bis 14, welches einen Kohlenhydratgehalt zwischen 40% und 78%, vorzugsweise zwischen 50% und 75% umfasst.

16. Fischbasiertes Nahrungsmittelprodukt nach einem der Ansprüche 11 bis 15, welches einen Aschegehalt zwischen 1% und 8,5%, und/oder einen Fasergehalt zwischen 0,15% und 0,5% umfasst.

17. Verwendung eines fischbasierten Nahrungsmittelprodukts nach einem der Ansprüche 10 bis 16 zum direkten Verzehr oder als Zutat bei der Agrar- und Ernährungsindustrie.

**Revendications**

1. Procédé pour la préparation de produit alimentaire à base de poisson, **caractérisé en ce qu'**il comprend les étapes suivantes :

a) préparation d'une pâte homogène comprenant :

- du muscle de poisson et/ou de la chair de poisson et/ou du surimi (P),
- de la farine et/ou de l'amidon (H),
- du sel,
- de l'agent levant,
- optionnellement du sucre et/ou de l'assaisonnement alimentaire,
- optionnellement de l'eau,

dans lequel le rapport P:H est de 1:1 à 3:1, préférablement de 1,5:1 à 2,5:1 ;

b) extrusion et farcissage de la pâte homogène préparée dans l'étape a) dans une enveloppe non poreuse, préférablement dans une enveloppe en plastique, pour obtenir un produit farci ;

c) application d'un traitement thermique au produit farci obtenu dans l'étape b) jusqu'à l'obtention d'un produit farci gélifié ;

d) stockage du produit farci gélifié obtenu dans l'étape c) pendant au moins 24 h à une température inférieure ou égale à 8 °C ;

e) retrait de l'enveloppe non poreuse du produit obtenu dans l'étape d) et découpe du produit en tranches, les tranches ont préférablement une épaisseur inférieure ou égale à 10 mm ;

f) séchage des tranches obtenues dans e) jusqu'à l'obtention d'un produit avec une teneur en humidité finale d'entre 5% et 18% ;

g) conditionnement et stockage au repos pendant au moins 24 h à une température d'entre 15 °C et 25 °C ;

h) expansion par traitement thermique,

dans lequel le produit alimentaire à base de poisson est un produit expansé et croustillant et a une texture uniforme.

2.  Procédé selon la revendication 1, dans lequel la pâte comprend :

- 20%-74% de P,
- 20%-45% de H,
- 0,1%-3% de sel,
- 0,2%-1% d'agent levant,
- 0%-5% de sucre,
- 0%-2% d'assaisonnement alimentaire, et
- 0%-30% d'eau,

dans lequel le pourcentage est fourni en poids sur la base du poids total de la pâte.

3.  Procédé selon la revendication 1 ou 2, dans lequel l'étape a) est effectuée selon les sous-étapes et l'ordre suivants :

a1) hachage du muscle de poisson et/ou de la chair de poisson et/ou du surimi ;

a2) ajout de l'agent levant, du sel, et optionnellement du sucre et/ou de l'assaisonnement alimentaire, et de 30-50% de la farine et/ou de l'amidon total au muscle de poisson et/ou à la chair de poisson et/ou au surimi haché, et mélange ;

a3) ajout du reste de la farine et/ou de l'amidon et l'eau, si la pâte comprend de l'eau, au mélange obtenu dans a2), et mélange ; et

a4) homogénéisation du mélange obtenu dans a3) sous vide.

4.  Procédé selon la revendication 3, dans lequel les étapes a1), a2) et a3) sont effectuées à entre 400 et 900 tpm, et/ou l'étape a4) est effectuée à entre 900 et 3200 tpm.

5.  Procédé selon l'une quelconque des revendications 3 à 4, dans lequel les étapes a1), a2), a3), et a4) sont effectuées à une température inférieure ou égale à 8 °C.

6.  Procédé selon l'une quelconque des revendications 1 à 5, dans lequel l'étape a) ou chacune de ses sous-étapes est effectuée sous vide.

7.  Procédé selon l'une quelconque des revendications précédentes, dans lequel l'étape c) est effectuée à une température inférieure ou égale à 93 °C.

**8.** Procédé selon l'une quelconque des revendications précédentes, dans lequel l'étape d) comprend en outre la congélation du produit après stockage.

**9.** Procédé selon l'une quelconque des revendications précédentes, dans lequel l'étape h) est effectuée par application de micro-ondes, cuisson au four ou friture, préférablement par micro-ondes ou cuisson au four.

**10.** Produit alimentaire expansé à base de poisson pouvant être obtenu par le procédé selon l'une quelconque des revendications 1 à 9, dans lequel le produit alimentaire à base de poisson est croustillant et a une texture uniforme.

**11.** Produit alimentaire à base de poisson, **caractérisé en ce qu'**il comprend :

- du muscle de poisson et/ou de la chair de poisson et/ou du surimi,
- de la farine et/ou de l'amidon,
- du sel et un agent levant,
- optionnellement du sucre et/ou de l'assaisonnement alimentaire,

dans lequel la teneur totale en protéines de poisson est d'au moins 12% et la teneur en humidité est inférieure ou égale à 5%, dans lequel le pourcentage est fourni en poids sur la base du poids total du produit, et dans lequel le produit est un produit expansé et croustillant et a une texture uniforme.

**12.** Produit alimentaire à base de poisson selon la revendication 11, dans lequel le produit est un snack à base de poisson.

**13.** Produit alimentaire à base de poisson selon la revendication 11 ou 12, comprenant une teneur en matière grasse d'entre 0,2% et 27,5%, préférablement d'entre 0,2 et 0,5%.

**14.** Produit alimentaire à base de poisson selon l'une quelconque des revendications 11 à 13, comprenant une teneur en protéines de poisson d'entre 12% et 27%, plus préférablement d'entre 15% et 27%.

**15.** Produit alimentaire à base de poisson selon l'une quelconque des revendications 11 à 14, comprenant une teneur en glucides d'entre 40% et 78%, préférablement d'entre 50% et 75%.

**16.** Produit alimentaire à base de poisson selon l'une quelconque des revendications 11 à 15, comprenant une teneur en cendres d'entre 1% et 8,5%, et/ou une teneur en fibres d'entre 0,15% et 0,5%.

**17.** Utilisation d'un produit alimentaire à base de poisson selon l'une quelconque des revendications 10 à 16 pour la consommation directe ou comme ingrédient dans l'industrie agroalimentaire.

FIG. 1

FIG. 2

# FIG. 3

A    B

FIG. 4

EP 3 560 349 B1

FIG. 5

23

A

B

FIG. 6

FIG. 7

A

B

# FIG. 8

**A**

**B**

**C**

# FIG. 9

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200401002576 A
- GB 1440544 A
- US 4814196 A
- CN 103948049

**Non-patent literature cited in the description**

- **SAELEAW M. ; SCHLEINING G.** Effect of frying parameters on crispiness and sound emission of cassava crackers. *Journal of Food Engineering,* 2011, vol. 103, 229-236
- Análisis sensorial. AENOR (Asociación Española de Normalización y Certificación), 2010